# EUROPEAN PATENT APPLICATION

(11) **EP 0 719 676 A1**
(43) Date of publication of application: **03.07.1996**
(21) Application number: 95119954.6
(22) Date of filing: 18.12.1995
(51) Int. Cl.: B60R 9/058

(54) **Magnetic device to carry bicycles and/or skis on motor vehicle roofs**

(30) Priority: 30.12.1994 IT TO941098; 25.01.1995 IT TO950045
(71) Applicant: Gemesio, Diego, I-12045 Fossano (CN) (IT)
(72) Inventor: Gemesio, Diego, I-12045 Fossano (CN) (IT)
(74) Representative: Robba, Eugenio

(57) **Abstract**

A magnetic device to carry bicycles (15) and/or skis (19) on motor vehicle roofs is composed of: at least one elongated front support member (1) including at least one magnetic plate (5), an elongated supporting body (7) and a plurality of front locking means (9, 11) equipped with clamping means (25) for the parts of the bicycles (15) or with securing means (27) for the skis (19); and at least one elongated rear support member (3) including at least one magnetic plate (37), an elongated supporting body (39) and a plurality of rear locking means (41, 43) equipped with securing means (53) for the parts of the bicycle (15) or for the skis (19).

## Description

The present invention refers to a magnetic device to carry bicycles and/or skis on motor vehicle roofs.

As regards the transport of bicycles on motor vehicle roofs, various types of so-called "bicycle carrier" devices are known in the art, and include for example elongated channels, longitudinally assembled with respect to the vehicle and adapted to contain bicycle wheels, and further equipped with hangers and other hooking means for bicycle frames. These bicycle carrier devices, however, have still to be installed on the so-called "universal carrier" bars, transversally assembled with respect to the vehicle roof and equipped with adequate securing means for different roof shapes and sizes.

Therefore, when a user wishes to carry a bicycle, he must first get a pair of universal carrier bars suitable for his car; then, he must install them, through more or less complicated and long operations; then he must assemble the bicycle carrier device on the universal carrier bars and finally his bicycle on the bicycle carrier device. All these operations, as already said, are long, complicated and error-prone, above all if a user wants to carry other objects (for example skis, parcels, etc.) before or after having carried his bicycles: obviously, he will have to continuously perform assembly and disassembly operations for the different devices on his vehicle roof.

As regards the transport of skis on motor vehicle roofs, in addition to the above-mentioned traditional ski carrier devices to be assembled on universal carrier bars, magnetic ski carrier devices are known in the art, for example composed of a pair of support members equipped with magnetic plates and with suitable ski-housing slots.

The following magnetic devices, however, are not known in the art: a combined magnetic device, on which it is possible to indifferently carry bicycles and skis, without having to attach and detach the various specialized magnetic devices, or without having to assemble and disassemble the traditional ski carriers or bicycle carriers; and a "reduced" embodiment of the above-mentioned combined magnetic device, that is adapted to carry a single bicycle on motor vehicle roofs.

Through the above-listed novel magnetic devices, the present invention realizes its main object, that is solving all the above problems, providing a combined magnetic device that can be easily and quickly installed on any type of vehicle equipped with metallic roof, that allows using and carrying bicycles and/or skis only when it is necessary, with simple and immediate assembly and disassembly operations; the device of the present invention, in addition, due to its modularity, is able to be prearranged for the transport of one or more pair of skis together with one or more bicycles (within the limits of the overall dimensions of the vehicle roof), or of skis only or of bicycles only, for example depending on the season.

The above and other objects and advantages of the invention, as will appear from the following description, are obtained with a combined magnetic device to carry bicycles and/or skis on motor vehicle roofs as described in claim 1, or with a magnetic device to carry a bicycle on motor vehicle roofs as described in claim 8.

The combined magnetic device of the present invention can be supplied already equipped with the above-said locking means for bicycles or skis, in the amount the user wants, or it can be realized in a modular form, where the user inserts and removes the locking means for bicycles or skis depending on his transport needs or on the season, for example.

The present invention will be better described by some preferred embodiments thereof, given as a non-limiting example, with reference to the enclosed drawings, in which:
- Figure 1 is a perspective view of a first, combined embodiment of the magnetic device according to the present invention in the position for carrying a bicycle on a vehicle roof;
- Figure 2 is a perspective view of the combined embodiment of the magnetic device of Fig. 1 in the position for carrying a pair of skis on a vehicle roof;
- Figure 3 is a perspective view of one of the support members prearranged for a modular assembly in the embodiment of Fig. 1;
- Figure 4 is a perspective view of one of the ski-locking means to be inserted in the support in Figure 3;
- Figure 5 is a perspective view of one of the locking means for a bicycle fork to be inserted in the support in Figure 3;
- Figure 6 is a perspective view of one of the locking means for a bicycle wheel to be inserted in the support in Figure 3;
- Figure 7 is a perspective view of a second embodiment of the magnetic device according to the present invention, adapted to carry a single bicycle and in the installation position on a vehicle roof;
- Figure 8 is a perspective view of the front support member of the embodiment shown in Fig. 7; and
- Figure 9 is a perspective view of the rear support member of the embodiment shown in Fig. 7.

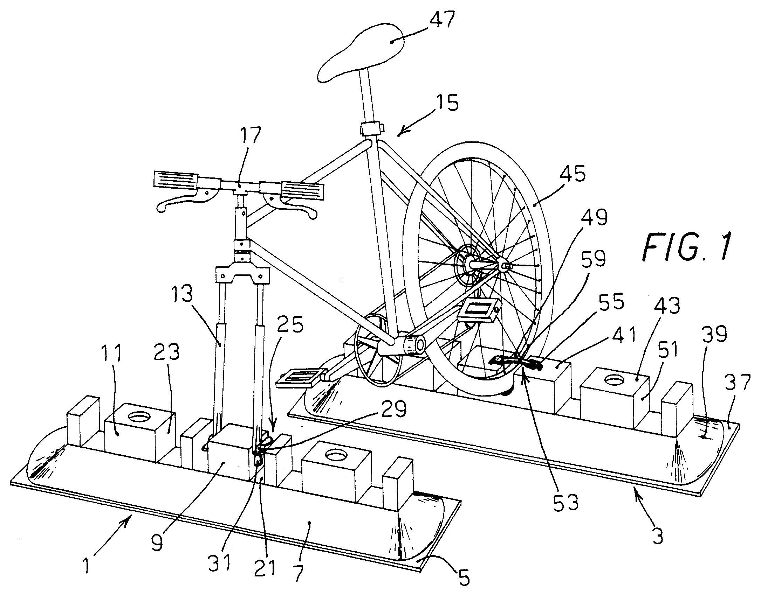

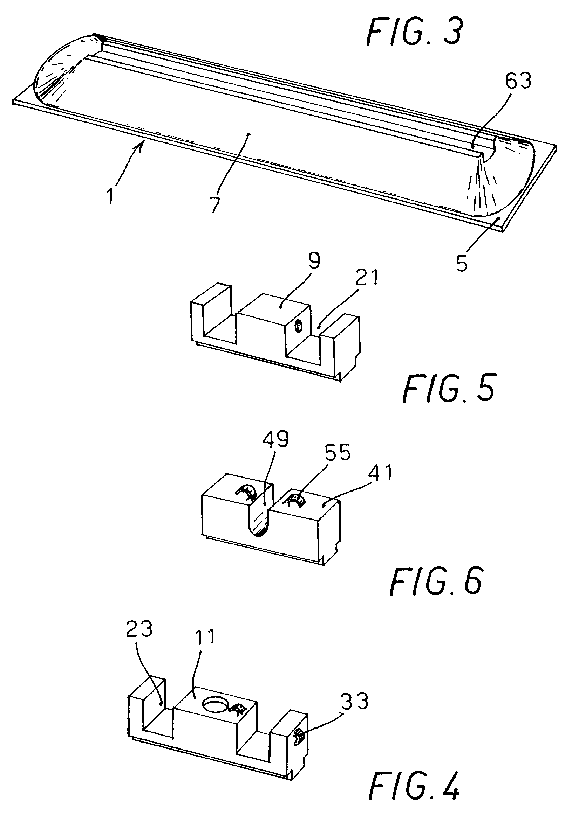

With reference first to Figures 1 to 6, the magnetic device to carry bicycles and/or skis on motor vehicle roofs according to the present invention is shown in its first combined embodiment, in order to carry both bicycles and skis, and substantially comprises at least one elongated front support member 1 and at least one elongated rear support member 3.

The front support member 1 comprises at least one magnetic plate 5 for attachment to the vehicle roof (not shown) and an elongated supporting body 7, connected in the lower part thereof to the magnetic plate 5. Though in the preferred embodiment shown in the drawings the magnetic plate 5 is a single one for each support member 1, 3, it is also possible to provide a plurality of equivalent magnetic plates, suitable to guarantee a better attachment on particular vehicle roof configurations.

The front support member 1 further includes a plurality of front locking means 9, 11, that can be alternatively used to lock the fork 13 of a bicycle 15 (the locking means having reference number 9), the handlebar 17 of the bicycle 15 (not shown), or an end of one or more pair of skis 19, (the locking means having reference number 11 are adapted, in the embodiment shown, to carry two pairs of skis each, but obviously locking means 11 can be arranged to carry any desired number of pairs of skis, in compliance with the overall dimensions of the combine magnetic device). In order to correctly operate, the locking means 9 are equipped, to carry the fork 13 of the bicycle 15, with a pair of slots 21 for the two arms of the fork 13. In turn, the locking means 11 are equipped with at least one slot 23 adapted to house an end of a pair of skis 19; according to another preferred embodiment (not shown), the slot 23 can be adapted to also house the sticks (not shown) of the skis 19.

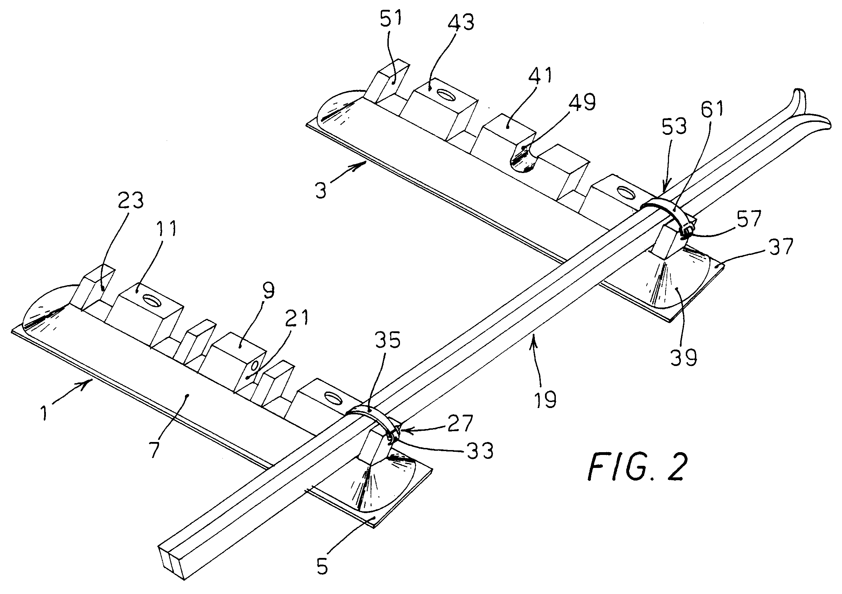

In the embodiment shown in Figures 1 and 2, the combined magnetic device includes one locking means 9 for a bicycle and two locking means 11 for four pairs of skis, assembled in a single body, but obviously it is also possible here to perform various combinations of the locking means 9, 11 for the different types of carried objects: these combinations, as will also be seen below, can be arranged in a factory upon assembling the combined magnetic device in a single body, or can be created by a user depending on current needs.

These front locking means 9, 11 are placed on the elongated support body 7 of the front support member 1, and are equipped with clamping means 25 for the parts of the bicycle 15 or with securing means 27 for the skis 19.

In particular, according to the shown, but non-limiting, embodiment of the present invention, the clamping means 25 for the fork 13 of the bicycle 15 include a pin 29 equipped at both ends thereof with an "eared" screw 31 to clamp the fork 13 on the locking means 9 after having inserted it on the pin 29. Instead, the securing means 27 can include an hook 33 to which an end of resilient means 35 is hooked, these resilient means 35 being unmovably connected, at the other end thereof, with the locking means 11. Obviously, those that are shown are only two of the possible embodiments of the clamping means 25 and of the securing means 27, those skilled in the art being able to easily arrange other equivalent solutions.

The elongated rear support member 3, in turn, also comprises at least one magnetic plate 37 for attachment to the vehicle roof, and an elongated supporting body 39, connected in the lower part thereof to the magnetic plate 37. In this case too, the magnetic plates for attachment can be more than one.

The rear support member 3 further comprises a plurality of rear locking means 41, 43, that are used to lock the wheel 45 of the bicycle 15 (the locking means having reference number 41), the saddle 47 of the bicycle 15 (not shown) or the other end of the above one or more pair of skis 19 (also the locking means having reference number 43 are adapted, in the embodiment shown, to carry two pairs of skis each, but obviously it is possible to arrange locking means 43, in parallel with the locking means 11, to carry any desired number of pairs of skis, in compliance with the overall dimensions of the combine magnetic device). In order to operate, the rear locking means 41 are equipped, to carry a wheel 45 of the bicycle 15, with a slot 49, for example shaped as a U. In turn, the locking means 43 are equipped, in the same way as the locking means 11, with at least one slot 51 adapted to house the other end of the skis 19; according to another preferred embodiment (not shown), the slot 51 can also be adapted to house the sticks (not shown) of the skis 19.

Also in this case, in the embodiment shown in Figures 1 and 2, the combined magnetic device includes one locking means 41 for a bicycle 15 and two locking means 43 for four pairs of skis 19, assembled in a single body, but obviously it is also possible here to perform various combinations of the locking means 41, 43 for the different types of carried objects, as mentioned above.

These rear locking means 41, 43 are placed on the elongated supporting body 39 of the rear support member 3 and are equipped with securing means 53 for the parts of the bicycle 15 or for the skis 19.

In particular, according to the embodiment shown, the securing means 53 include hooks 55 and 57 and resilient means 59 and 61, to respectively secure bicycles 15 and skis 19, in a known way.

As already mentioned before, the combined magnetic device can be realized in a modular form: in such case, both the elongated supporting bodies 7, 39 are equipped inside with a housing 63, in which it is possible to insert the different types of locking means 9, 11, 41, 43, securing then them, for example through common screws. In this way, the end user himself can arrange the combined magnetic device of the present invention to carry, for example, six pairs of skis 19, or three bicycles 15, or two bicycles 15 and two pairs of skis 19, etc.

The support members 1, 3 can also be shaped in such a way as to provide for the installation of anti-theft devices (not shown) that protect the magnetic device of the present invention from undesired removals due to the detachment of the magnetic plates 5, 37 from the vehicle roof.

After having arranged the combined device, it is operatively installed in an easy and immediate way. For example, it is possible to assemble the bicycle 15 on the two support members 1, 3 and then lay everything on the vehicle roof, inserting then also the skis 19 to be carried. Or the assembly of the objects on the support members 1, 3 can be carried out after having placed them on the roof.

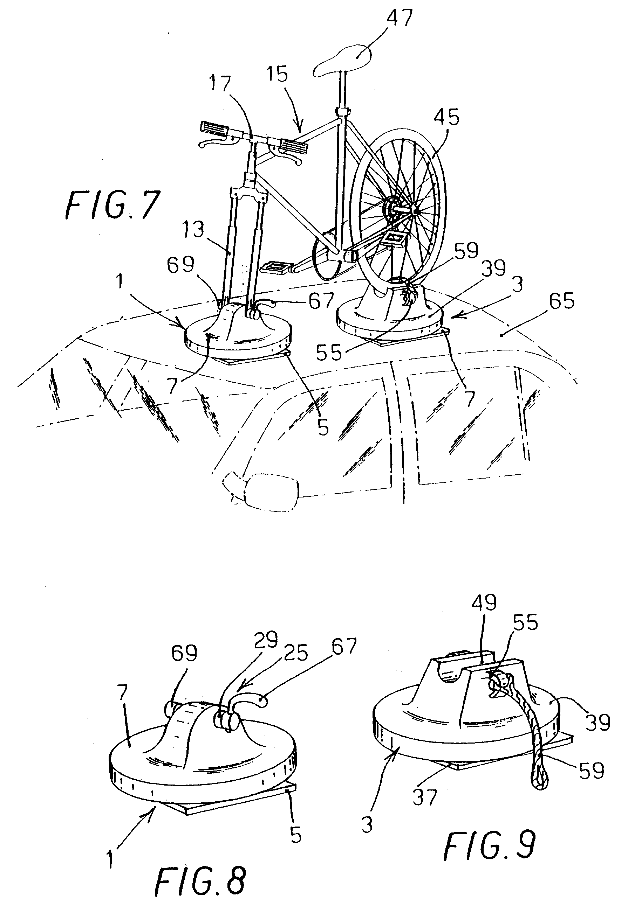

With reference now to Figures 7 to 9, the magnetic device of the present invention is shown in a second, main embodiment of its that is adapted to carry a single bicycle on motor vehicle roofs. This second embodiment is a sort of "reduced" arrangement of the first one, and like reference numbers in it denote like parts in both embodiments. In this second embodiment, the magnetic device of the present invention is substantially composed of a front support member 1 and a rear support member 3.

The front support member 1 comprises at least one magnetic plate 5 that is placed on the metallic roof 65 of the vehicle, in a known way, to guarantee the unmovable attachment of the whole device of the present invention. Also here, though in the preferred embodiment shown in the drawings the magnetic plate 5 is a single one for each support member 1, 3, it is also possible to provide a plurality of equivalent magnetic plates, suitable to guarantee a better attachment on particular vehicle roof configurations.

Moreover, the front support member 1 includes a central supporting body 7, connected in the lower part thereof to the magnetic plate 5, and clamping means 25 commonly placed in the upper part of the supporting body 7. Purpose of these clamping means 25 is clamping the fork 13 (or the handlebar 17, if the bicycle 15 is assembled upside down) of a bicycle 15 to the supporting body 7; the clamping means 25 are preferably composed, to assemble the fork 13, of a pin 29 that is equipped at one end with a retainer 69 and at the other end with a small lever 67 to clamp the fork 13 once having assembled it.

The rear support member 3 also comprises at least one magnetic plate 37 that is placed on the metallic roof 65 of the vehicle, in a known way, to guarantee the unmovable attachment of the whole device of the present invention. In this case too, the magnetic plates for attachment can be more than one.

The rear support member 3 further includes a central supporting body 39, that is connected in the lower part thereof to the magnetic plate 37 and that contains a housing 49 adapted to receive a wheel 45 of the bicycle 15, usually the rear wheel, as shown in Fig. 7. The housing 49 can also contain the saddle 47 of the bicycle 15, if the bicycle 15 is assembled upside down. According to the preferred embodiment shown in Fig. 7 to 9, the housing 49 is U-shaped to better and unmovably receive the wheel 45 of the bicycle 15.

The wheel 45 is finally secured to the rear support member 3 by securing means, composed, in the preferred embodiment and to secure the wheel 45, by at least a resilient strap 59 that is hooked to a pair of hooks 55 and rests over the wheel 45 rim.

ALso in this case, the support members 1, 3 can be shaped in such a way as to provide for the installation of anti-theft devices (not shown) that protect the magnetic device of the present invention against undesired removals due to the detachment of the magnetic plates 5, 37 from the vehicle roof 65.

The operation of the second embodiment of the magnetic device according to the present invention will now be described, showing the installation procedure thereof on the vehicle roof 65 with the bicycle in a normal position.

The front support member 1 and the rear support member 3 are first applied on the roof 65, in a known way. Then, the front wheel of the bicycle 15 is removed and the related fork 13 is inserted on the pin 29; then, the fork 13 is locked by rotating the small securing lever 67 in a sufficient way to unmovably secure the fork 13 itself to the front support member 1.

The tyre of the rear wheel 45 of the bicycle 15 is then inserted in the housing 49 of the rear support member 3 and the wheel 45 is secured through the resilient strap 59 hooked to the pair of hooks 55.

## Claims

1. Combined magnetic device to carry bicycles (15) and/or skis (19) on motor vehicle roofs, characterized in that it is composed of:
- at least one elongated front support member (1), said at least one front support member (1) comprising:
• at least one magnetic plate (5) for attachment to the roof;
• an elongated supporting body (7) connected in the lower part thereof to said at least one magnetic plate (5); and
• a plurality of front locking means (9, 11) for the fork (13) of a bicycle (15), for the handlebar (17) of said bicycle (15) or for an end of one or more pair of skis (19), said front locking means (9, 11) being placed on said elongated supporting body (7) of said front support member (1), said locking means (9, 11) being equipped with clamping means (25) for the parts of the bicycle (15) or with securing means (27) for the skis (19); and
- at least one elongated rear support member (3), said at least one rear support member (3) comprising:
• at least one magnetic plate (37) for attachment to the roof (7);
• an elongated supporting body (39) connected in the lower part thereof to said at least one magnetic plate (37); and
• a plurality of rear locking means (41, 43) for the wheel (45) of said bicycle (15), for the saddle (47) of said bicycle (15) or for the other end of said one or more pair of skis (19), said rear locking means (41, 43) being placed on said elongated supporting body (39) of said rear support member (3), said rear locking means (41, 43) being equipped with securing means (53) for the parts of the bicycle (15) or for the skis (19).

2. Combined magnetic device according to claim 1, characterized in that said elongated supporting bodies (7, 39) are equipped with a housing (63), and said front (9, 11) and rear (41, 41) locking means are realized in a modular form, said housing (63) being adapted to contain said front (9, 11) and rear (41, 43) locking means depending on a user-defined configuration.

3. Combined magnetic device according to claim 1 or 2, characterized in that said front (1) and rear (3) support members include locking means (9, 11, 41, 43) suitable to carry a bicycle (15) in the central position and two respective pair of skis (19) in the two lateral positions.

4. Combined magnetic device according to claim 1, 2 or 3, characterized in that said locking means (9) are equipped, to carry the fork (13) of the bicycle (15), with a pair of slots (21) for the two arms of the fork (13), said locking means (11) are equipped with at least one slot (23) adapted to house an end of said pair of skis (19), said rear locking means (41) are equipped, to carry the wheel (45) of the bicycle (15), with a slot (49), and said rear locking means (43) are equipped with at least one slot (51) adapted to house the other end of the skis (19).

5. Combined magnetic device according to claim 4, characterized in that said slots (23, 51) are adapted to also house the sticks of the skis (19).

6. Combined magnetic device according to any one of the previous claims, characterized in that said securing means (27) include an hook (33) to which an end of resilient means (35) is hooked, said resilient means (35) being unmovably connected, at the other end thereof, with said locking means (11).

7. Combined magnetic device according to any one of the previous claims, characterized in that said securing means (53) include hooks (55) and (57) and resilient means (59) and (61) to respectively secure bicycles (15) and skis (19).

8. Magnetic device to carry bicycles (15) on motor vehicle roofs (65) characterized in that it is composed of:
- a front support member (1), said front support member (1) comprising:
• at least one magnetic plate (5) for attachment to the roof (65);
• a supporting body (7) connected in the lower part thereof to said at least one magnetic plate (5); and
• clamping means (25), said clamping means (25) being adapted to clamp a fork (13) or an handlebar (17) of a bicycle (15) and being placed on said supporting body (7) of said front support member (1); and
- a rear support member (3), said rear support member (3) comprising:
• at least one magnetic plate (37) for attachment to the roof (65);
• a supporting body (39) connected in the lower part thereof to said at least one magnetic plate (37), said supporting body (39) containing a housing (49) for a wheel (45) or the saddle (47) of said bicycle (15); and
• securing means (59, 55), said securing means (59, 55) being adapted to secure said wheel (45) or saddle (47) of said bicycle (15) to said supporting body (39) of said rear support member (3).

9. Magnetic device according to claim 8, characterized in that said securing means (59, 55) for the wheel (45) are equipped with at least one resilient strap (59) that is hooked to a pair of hooks (55) and rests over the wheel (45) rim.

10. Magnetic device according to any one of the previous claims, characterized in that said clamping means (25) for the fork (13) of the bicycle (15) include a pin (29) equipped at both the ends thereof with an "eared" screw (31).

11. Magnetic device according to any one of claims 1 to 9, characterized in that said clamping means (25) for the fork (13) of the bicycle (15) include a pin (29) that is equipped at one end with a retainer (69) and at the other end with a small lever (67) to clamp the fork (13).

12. Magnetic device according to any one of the previous claims, characterized in that said front support member (1) and/or said rear support member (3) are equipped with respective pluralities of magnetic plates (5, 37).

13. Magnetic device according to any one of the previous claims, characterized in that said front support member (1) and/or said rear support member (3) are further equipped with an anti-theft device adapted to prevent the removal of the magnetic device due to lifting of said magnetic plates (5, 37).
